# EUROPÄISCHE PATENTANMELDUNG

(11) **EP 1 186 908 A2**
(43) Veröffentlichungstag der Anmeldung: **13.03.2002**
(21) Anmeldenummer: 01117070.1
(22) Anmeldetag: 13.07.2001
(51) Int. Cl.: G01S 13/72

(54) **Verfahren zum Verfolgen eines sich bewegenden Ziels**

(30) Priorität: 06.09.2000 DE 10044026
(71) Anmelder: STN ATLAS Elektronik GmbH, 28305 Bremen (DE)
(72) Erfinder: Scherm, Norbert, 28195 Bremen (DE); Warmers, Heinrich, 28844 Weyhe (DE)
(74) Vertreter: Thul, Hermann, Dipl.-Phys.

(57) **Zusammenfassung**

Bei einem Verfahren zum Verfolgen eines sich bewegenden Ziels, bei dem mindestens ein Sensor (11) auf das Ziel (10) ausgerichtet und diesem nachgeführt wird, wird zwecks Verbesserung der Verfahrenseigenschaften bezüglich Zielsicherheit und Weiterverfolgung bei Zielverlust zur Schätzung des Nachführfehlers ein nichtlinearer, zeitdiskreter "Extended-Ruenberger-Beobachter (20) in Multirateform verwendet. Der Beobachter (20) nutzt das Levenberg-Marquardt-Verfahren und ist als multi-output-System ausgelegt.

## Beschreibung

Die Erfindung betrifft ein Verfahren zum Verfolgen eines sich bewegenden Ziels der im Oberbegriff des Anspruchs 1 definierten Gattung.

Bei einem bekannten Verfahren zum automatischen Verfolgen eines Ziels (EP 0 309 002 B1) werden Verfolgungsfehlersignale aus Videoeingangssignalen erzeugt, die aus einer Zielszene erhalten und zur Bildung aufeinanderfolgender Videorahmen einer zweidimensionalen Bildebene verwendet werden. In einem ersten Videoprozessor (centroid prozessor) werden die Videoeingangssignale verarbeitet und ein Satz von Verfolgungsfehlersignalen erzeugt. In einem zweiten Videoprozessor (correlation processor) werden ebenfalls die Videoeingangssignale verarbeitet und ein zweiter Satz von Verfolgungsfehlersignalen erzeugt. Im zweiten Videoprozessor wird zum einen für einen laufenden Videorahmen eine laufende Karte von Pixelintensitätswerten gespeichert und die laufende Karte rekursiv regeneriert und zum anderen eine frühere Karte von Pixelintensitätswerten für einen dem laufenden Rahmen vorhergehenden Videorahmen abgespeichert. Die gespeicherte frühere Karte von Pixelintensitätswerten wird dem ersten Prozessor zugeführt, wodurch die von dem ersten Prozessor empfangenen Videoeingangssignale mit der früheren Karte von Pixelintensitätswerten kombiniert werden. Ein solches Verfahren ergibt einen sog. Dual-Mode-Tracker (DMT) der einen Videoprozessor des "correlation type" und des "centroid type" umfaßt, die automatisch in der Weise gesteuert werden, daß der für die Verfolgung einer speziellen Szene am besten geeignete Prozessor automatisch ausgewählt wird.

Der Erfindung liegt die Aufgabe zugrunde, ein Zielverfolgungsverfahren der eingangs genannten Art anzugeben, dessen Eigenschaften bezüglich Zielsicherheit und Weiterverfolgung bei Zielverlust wesentlich verbessert sind.

Die Aufgabe ist erfindungsgemäß durch die Merkmale im Anspruch 1 gelöst.

Das erfindungsgemäße Verfahren hat den Vorteil, daß für die Zielverfolgung ein sog. nichtlinearer Beobachter zum Einsatz kommt, in dem nichtlineare mathematische Modelle zur Beschreibung der Zieldynamik verwendet werden und dadurch auch komplexe Bewegungsabläufe, wie sie z.B. bei Flugobjekten vorkommen, vorhersagbar sind. Die Vorhersagen für zu erwartende Zielzustände sind dadurch sehr viel genauer, und insbesondere sind Flugbewegungen in Nähe des Sensors, z.B. Vorbeiflüge in geringem Abstand, sehr sicher erfaßbar. Die Zustandsschätzungen basieren dabei auf mehreren, zeitlich aufeinanderfolgend aufgenommenen Messungen, wozu die Aktualisierung der Zustandsschätzung und die Meßwertaufnahme mit unterschiedlichen Abtastraten erfolgt (multirate). Das erfindungsgemäße Verfahren gestattet es, die Dynamik des Nachführfehlers für alle beobachteten Zustände des Ziels, wie z.B. Geschwindigkeit, Beschleunigung oder Position, unabhängig voneinander vorzugeben. Die Bandbreite des Fehlersignals orientiert sich dabei nicht an statistischen, sondern an dynamischen Manövereigenschaften des Ziels, die leicht abzuschätzen sind und die Dynamik des Systems direkt vorgeben. Durch die Zusammenfassung mehrerer, physikalisch unterschiedlicher Zustandsdaten des Ziels in Vektoren, die den einzelnen Meßzeitpunkten zugeordnet sind, ergibt sich ein sog. multi-output-System, bei dem vorteilhaft eine Vielzahl von Meßdaten zur Beschreibung des Zielzustands gleichzeitig verarbeitet werden. Das Verfahren arbeitet zeitdiskret, da der Sensor eine Folge von Vektoren liefert, also das vom Sensor erfaßte Szenario unmittelbar abgetastet wird.

Aufgrund seines extrem kleinen Nachführfehlers bei der Zielverfolgung eignet sich das erfindungsgemäße Verfahren nicht nur für den Einsatz bei Zielbeobachtung, sondern auch für den Einsatz bei Feuerleitung (Prädiktion).

Zweckmäßige Ausführungsformen des erfindungsgemäßen Verfahrens mit vorteilhaften Weiterbildungen und Ausgestaltungen der Erfindung ergeben sich aus den weiteren Ansprüchen.

Gemäß einer bevorzugten Ausführungsform der Erfindung wird als Iterations-Algorithmus das Levenberg-Marquardt-Verfahren eingesetzt. Der Einsatz dieses Verfahrens erlaubt es, auch signifikante Ablagefehler, also signifikante Unterschiede zwischen geschätzten und gemessenen Zuständen des Ziels, zu beherrschen.

Gemäß einer vorteilhaften Ausführungsform der Erfindung wird beim Levenberg-Marquardt-Verfahren die Methode der Schrittweitensteuerung angewendet, wie sie von Osborne in [1] beschrieben wird. Eine solche Schrittweitensteuerung gewährleistet stets die Konvergenz des Iterationsverfahrens, was zu einem robusten Verhalten auch bei schlecht konditionierten Problemen, wie etwa bei fehlender Entfernungsmessung, führt.

Gemäß einer vorteilhaften Ausführungsform der Erfindung wird für die Nachbildung des dynamischen Zielverhaltens eine Mehrzahl von mathematischen Modellen abgespeichert und die Auswahl des Modells unter Berücksichtigung der Art des Sensors und des erwarteten Ziels durch den Operateur oder einer Auswahlautomatik getroffen.

In einer verbesserten Alternative hierzu wird gemäß einer weiteren Ausführungsform der Erfindung von der Mehrzahl der abgespeicherten Modelle parallel mit mehreren Modellen gleichzeitig jeweils Schätzvektoren generiert und die Schätzvektoren desjenigen Modells für die Nachführung zugelassen, die bezüglich der Meßvektoren das günstigste Konvergenzverhalten erzielen.

Die Erfindung ist anhand eines in der Zeichnung dargestellten Ausführungsbeispiels im folgenden näher beschrieben. Es zeigen:
- Fig. 1: ein Blockschaltbild eines Zielverfolgungssystems auf Basis des erfindungsgemäßen Zielverfolgungsverfahrens,
- Fig. 2: eine Darstellung zur Erläuterung der Bildung von Meßvektoren in einem Meßwertspeicher des Systems in Fig. 1,
- Fig. 3: eine graphische Darstellung zur Erläuterung der Meßzyklen,
- Fig. 4: eine graphische Darstellung einer Positionsbeschreibung des Ziels in Polarkoordinaten,
- Fig. 5: eine graphische Darstellung einer Zustandsbeschreibung des Ziels in kartesischen Koordinaten,
- Fig. 6: eine auf den Azimut beschränkte Darstellung des Zusammenhangs von Meßwinkel des Sensors und Sichtlinienwinkel einer den Sensor tragenden Plattform bei Zielauffassung,
- Fig. 7 und 8: jeweils eine Zusammenstellung der in der Beschreibung benutzen Gleichungen.

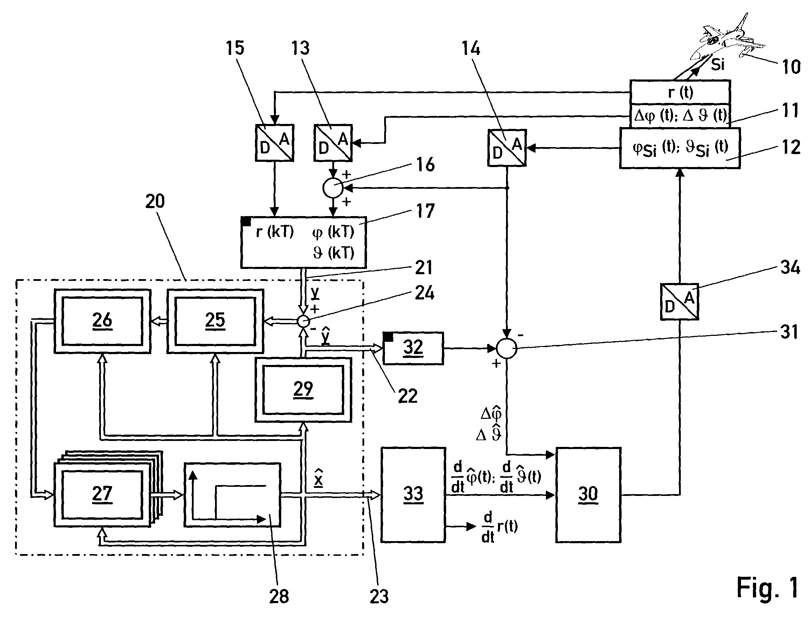

Bei dem in Fig. 1 im Blockschaltbild dargestellten Zielverfolgungssystem wird ein auf ein sich bewegendes Ziel 10 ausgerichteter Sensor 11 dem Ziel 10 permanent nachgeführt und der momentane Zustand, im Ausführungsbeispiel die momentane Position, des Ziels 10 permanent vermessen. Im Ausführungsbeispiel der Fig. 1 ist der Sensor 11 ein optischer Sensor, z.B. eine Infrarot- oder Videokamera, die ein Flugobjekt verfolgt. Für andere Anwendungsfälle kann der Sensor auch eine Radar- oder Sonarkomponente sein.

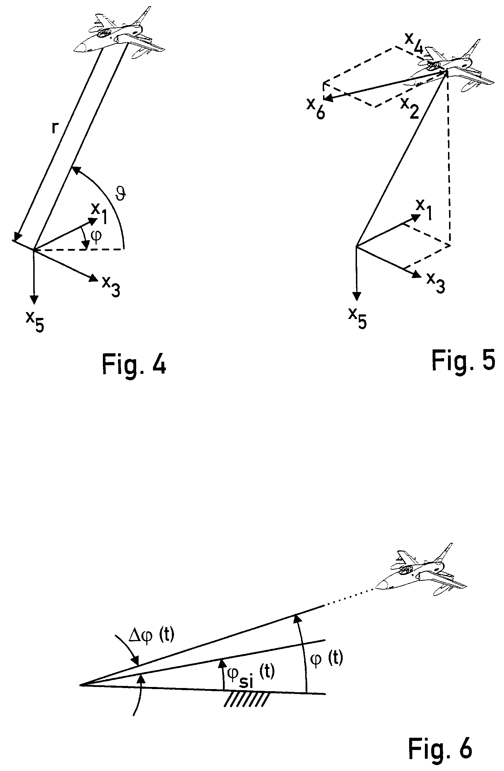

Zur Zielverfolgung ist der Sensor 11 auf einer Plattform 12, vorzugsweise einem Kardanrahmen, angeordnet, die durch entsprechende Drehung in Azimut und Elevation mit ihrer Sichtlinie Si auf das Ziel 10 ausgerichtet wird. Dabei mißt der Sensor 11 entsprechend seiner Ausrichtung auf der Plattform 12 eine Winkeldifferenz Δϕ im Azimut und Δϑ in Elevation zwischen der Sichtlinie Si und dem verfolgten Ziel 10. Für den Azimut ist dies in Fig. 6 dargestellt. Für Elevation gilt die Darstellung in Fig. 6 entsprechend. Zusätzlich kann unter Verwendung eines auf der Plattform 12 angeordneten weiteren Sensors auch die Entfernung r des Ziels 10 gemessen werden. Eine solche Messung des radialen Abstandes vom Ziel 10 ist mittels Laser- oder Radarmessung oder auch durch stereoskopische Messung möglich. Bei einer stereoskopischen Messung wird beispielsweise eine Tageslichtkamera und ein Wärmebildgerät geometrisch versetzt auf der Plattform 12 angeordnet. Durch Auswerten von Abbildungsunterschieden zwischen den beiden gewonnenen Bildern gelingt es, auf stereoskopischem Wege die Abstandsinformation zu erhalten. Die Kenntnis des Abstandes bzw. der Entfernung r zum Ziel 10 ist nicht zwingend notwendig, kann aber im Einzelfall die Konditionierung der Zielverfolgungsaufgabe verbessern. Die Lage der Sichtlinie Sᵢ läßt sich beispielsweise mit Hilfe von Kreiseln erfassen und ist durch den Azimutwinkel ϕ_{Si}(t) und dem Elevationswinkel ϑ_{Si}(t) beschrieben.

Nach Abtastung der gemessenen Positionsdaten durch Analog-Digital-Wandler (A/D-Wandler) 13, 14, 15 stehen die Abtastwerte der Winkeldifferenzen Δϕ(kT); Δϑ(kT), der Sichtlinienwinkel ϕ_{Si}(kT), ϑ_{Si}(kT) sowie der Entfernung r(kT) zum Ziel 10 zu den Abtastzeitpunkten O, T, 2T, 3T .... für eine digitale Verarbeitung zur Verfügung. Ein Addierglied 16 erzeugt aus den Abtastwerten der Winkeldifferenzen und Sichtwinkel die Abtastwerte der Zielwinkel ϕ(kT) und ϑ(kT), die zusammen mit den Entfernungsabtastwerten r(kT) einem Meßwertspeicher 17 zugeführt werden. Im Meßwertspeicher 17 werden die Abtastwerte für jeden Abtastzeitpunkt kT, (k+1)T, ....(k+m-1)T zu einem Meßvektor y zusammengestellt.

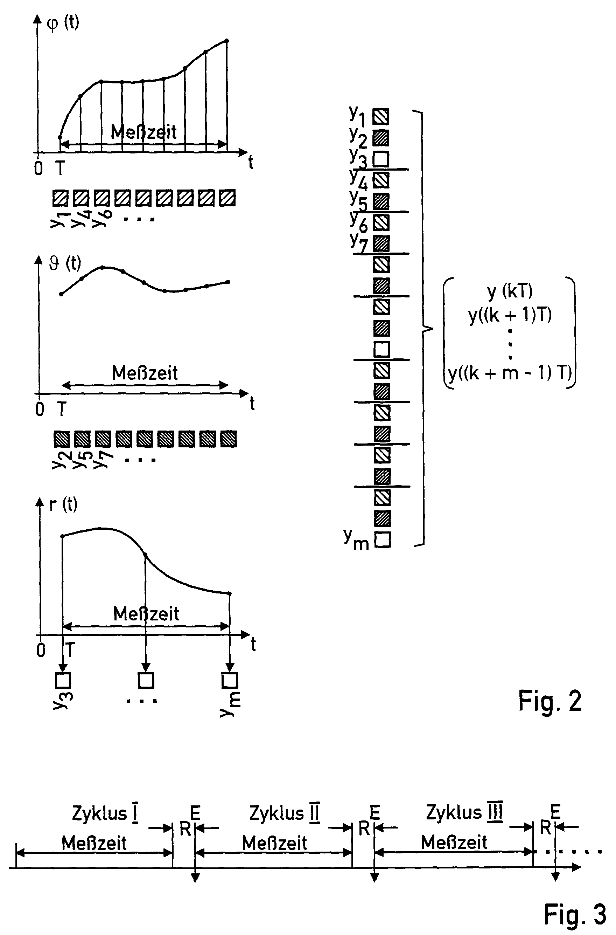

In Fig. 2 ist ein mögliches Ausführungsbeispiel für den Abtastvorgang graphisch dargestellt, und zwar für einen Meßzyklus mit vorgegebener Meßzeit, innerhalb der beispielsweise zu neun äquidistanten Zeitpunkten abgetastet wird und dabei insgesamt einundzwanzig Meßwerte y₁, y₂.... yₘ erhalten werden. Diese Abtastwerte werden zu insgesamt neun Meßvektoren y(kT); y((k+1)T); ... y((k+m-1)T) zusammengefaßt. Jeder Meßvektor enthält dabei zwei Winkelwerte ϕ and ϑ und gelegentlich einen Entfernungswert r. Am Ende des Meßzyklus liegt eine zeitdiskrete Folge von Meßvektoren y vor, die die vermessenen Position des Ziels zu jedem der Zeitpunkte kT, (k+1)T, ....(k+m-1)T angeben, und zwar in den Sensorkoordinaten, also Polar- oder Kugelkoordinaten r, ϕ und ϑ, wie sie in der graphischen Darstellung in Fig. 4 eingezeichnet sind. So besteht der Vektor y(kT)für den Abtastzeitpunkt kT aus den Abtastwerten y₁, y₂ und y₃, der dem Abtastzeitpunkt (k+1)T zugeordnete Vektor y((k+1)T) aus den Abtastwerten y₄ und y₅ usw., wie dies in Fig. 2 rechts dargestellt ist. Der Vektor y(kT) enthält dabei einen Azimutwinkelwert, einen Elevationswinkelwert und einen Entfernungswert, die durch unterschiedliche Schraffur der zugeordneten Kästchen symbolisiert sind. Der Vektor y((k+1)T) enthält dagegen mit den Abtastwerten y₄ und y₅ nur einen Azimutwinkelwert und einen Elevationswinkelwert, ebenso wie der Vektor y(k+2)T nur den Azimutwinkelwert y₆ und den Elevationswinkelwert y₇ besitzt.

In jedem Meßzyklus wird im Meßwertspeicher 17 eine solche Folge von Meßvektoren y zusammengestellt, die am Eingang 21 eines sog. Beobachters 20 zur Verfügung steht. Solche, wie vorstehend beschriebenen Meßzyklen, in denen jeweils eine zeitdiskrete Folge von Meßvektoren y, die die Position des Ziels 10 zu den gewählten Abtastzeitpunkten angeben, werden wiederholt aufeinanderfolgend aufgenommen. In Fig. 3 sind auf einer Zeitachse t drei aufeinanderfolgende Meßzyklen einer Vielzahl von Meßzyklen dargestellt und mit I, II und III gekennzeichnet. Die Zykluszeit eines jeden Meßzyklus ist konstant. Ebenso die Meßzeit innerhalb des Meßzyklus, in der die zeitdiskrete Folge von Meßvektoren y aufgenommen wird. Die Meßzeit ist dabei etwas kürzer bemessen als die Zykluszeit, so daß für den Beobachter 20 noch Rechenzeit R zur Verarbeitung der Folge von Meßvektoren y im Meßzyklus verbleibt und er am Ende E eines jeden Meßzyklus, das mit dem Anfang des nächsten Meßzyklus zusammenfällt, Vorgabedaten für die Zielposition im folgenden Meßzyklus, nachfolgend Beobachterzustände x̂ genannt, zur Verfügung stellt. In Fig. 3 sind die Ausgabezeitpunkte der Beobachterzustände durch mit dem Zyklusende E zusammenfallende Querpfeile gekennzeichnet.

Der Beobachter 20 generiert mit den zeitdiskreten Folgen der Meßvektoren y in den Blöcken 25 - 29 innerhalb eines jeden Meßzyklus Eingangssignale für einen Regler 30, mit dem die Sichtlinie der Plattform 12 mit Sensor 11 dem sich bewegenden Ziel 10 nachgeführt wird. Dabei wird folgendes Verfahren angewendet:

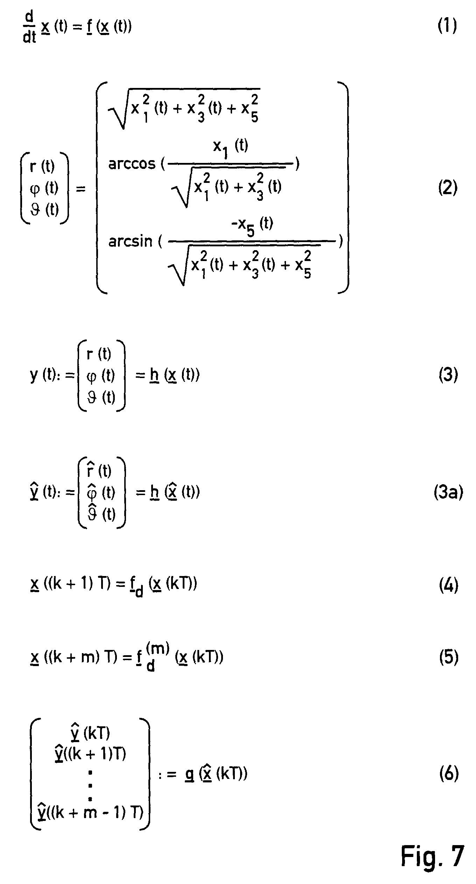

Die vom Meßwertspeicher 17 abgenommene, am Eingang 21 des Beobachters 20 anstehende Folge zeitdiskreter Meßvektoren y wird einem Differenzbildner 24 zugeführt. Diesem Differenzbildner 24 wird gleichzeitig eine vom Beobachter 20 generierte, zeitdiskrete Folge von Schätzvektoren ŷ zugeführt, die für die gleichen Meßzeitpunkte kT, (k+1)T, .... (k+m-1)T geschätzte Positionen des Ziels 10 in Polarkoordinaten definieren. Jeder Schätzvektor ŷ enthält wiederum zwei Winkelkomponenten für Azimut und Elevation sowie ggf. eine Entfernungskomponente. Diese Schätzvektoren ŷ werden anhand eines das dynamische Zielverhalten beschreibenden mathematischen Modells erstellt. Bei dem mathematischen Modell wird von einem Differentialgleichungssystem in der allgemeinen Form gemäß Gl.(1) in Fig. 7 und den Anfangsbedingungen x(0)=x₀ ausgegangen. Die Zustandsvektoren x(t) beschreiben die Position des Ziels 10 zu den Meßzeitpunkten, und zwar zunächst in Zielkoordinaten, also in kartesischen Koordinaten x₁ bis x₆, wie sie in Fig. 5 dargestellt sind. Die Zustandsvariablen x₁(t), x₃(t), x₅(t) beschreiben dabei die Lage des Ziels 10 im kartesischen Koordinatensystem, während mit den Größen x₂(t), x₄(t) und x₆(t) die Komponenten des Geschwindigkeitsvektors dargestellt werden. Bei einer gleichförmigen Bewegung des Ziels führt dies zu einem Gleichungssystem sechster Ordnung, wobei der Zusammenhang zwischen den vom Sensor 11 in einem sphärischen Koordinatensystem gelieferten Meßdaten und dem kartesischen Koordinatensystem durch Gl.(2) in Fig. 7 gegeben ist. Eine vereinfachte Schreibweise des Zusammenhangs zwischen den Zustandsvektoren x(t) und den Vektoren in Polarkoordinaten y(t) gibt Gl.(3) in Fig. 7 an. Die im Block 29 (Koordinatentransformator) mit Hilfe von Gl.(3a) in das Polarkoordinatensystem des Sensors 11 transformierten Schätzvektoren ŷ werden als zeitdiskrete Folge dem Differenzbildner 24 zugeführt, und zwar zu den gleichen Zeitpunkten, zu denen die zugehörigen Meßvektoren y anliegen, also zu den Zeitpunkten kT, (k+1)T, ... (k+m-1)T. Am Ausgang des Differenzbildners 24 ergibt sich eine zeitdiskrete Folge von Fehlervektoren, die jeweils durch die Differenzen zwischen den zu gleichen Zeitpunkten gehörigen Meßvektoren y und Schätzvektoren ŷ festgelegt sind.

Im Block 25 werden aus den Fehlervektoren und aus den geschätzten Zustandsvektoren oder Beobachterzuständen x̂ mittels eines Iterations-Algorithmus Korrekturvektoren abgeleitet. Als Iterations-Algorithmus wird vorzugsweise der Levenberg-Marquardt-Algorithmus mit Schrittweitensteuerung eingesetzt. Dieser Algorithmus ist in [1] beschrieben. Im Block 26 wird die Fehlerdynamik vorgegeben. Dieser Block 26 bewirkt eine Filterung der Beobachterzustände x̂.

Im Block 27 wird mittels des bereits angesprochenen mathematischen Modells (Differentialgleichungssystem) auf Basis der Fehlervektoren und der Beobachterzustände x̂ eine Prognose für die Position des Ziels 10 in dem nachfolgenden Meßzyklus getroffen. Dabei kommt ein sog. multirate-Modell zur Anwendung, das nicht den nächsten Vektor x̂((k+1)T) in Abhängigkeit von seinem Vorgänger x̂(kT), sondern einen weiter in der Zukunft liegenden Zustandsvektor x̂((k+m)T) schätzt, also auf mehreren zeitlich aufeinanderfolgende Messungen aufbaut. Die Rechnungen basieren auf Gl.(4) und (5) in Fig. 7. Mathematisch wird das multirate-Modell durch Gl.(5) in Fig. 7 beschrieben, wobei die nichtlineare Funktion f_{d}^{[m]} im Block 27 Anwendung findet. Das multirate-Modell entsteht beispielsweise durch zyklisches Aufrufen der Funktion gemäß Gl.(4) und wird durch die Nichtlinearität f_{d}^{[m]} beschrieben, die im Beobachter 20 beispielsweise mit Hilfe numerischer Integrationsverfahren, z.B. Runge-Kutta-Fehlberg, realisiert wird. Die prognostizierten, zeitdiskreten, geschätzten Zustandsvektoren x̂ (Beobachterzuständen) gehen am Ende der Zykluszeit in die für den nächsten Meßzyklus benötigte Folge von Beobachterzuständen x̂ über und stehen am Ausgang eines Halteglied 28 an. Diese Beobachterzustände x̂ werden wieder - wie vorstehend bereits erläutert - in Block 29 in die Polarkoordinaten des Sensors 11 transformiert, wobei im Block 29 die Beziehung gemäß Gl.(6) realisiert ist. Die transformierten Schätzvektoren ŷ werden in gleicher Weise, wie vorstehend beschrieben, wieder dem Differenzbildner 24 zugeführt und dort mit den Meßvektoren y des folgenden Meßzyklus, wie zuvor beschrieben, verarbeitet. Dieser Vorgang wiederholt sich in jedem Meßzyklus, wobei am Ende eines jeden Meßzyklus die prognostizierten, geschätzten Zustandsvektoren x̂ (Beobachterzustände) für die Positionen des Ziels 10 in dem folgenden Meßzyklus in einer zeitdiskreten Folge zur Verfügung stehen, wie dies in Fig. 3 durch die Querpfeile am Ende E eines jeden Zyklus gekennzeichnet ist.

Aus den in die Polarkoordinaten transformierten, prognostizierten Schätzvektoren ŷ werden Eingangsgrößen für den die Plattform 12 steuernden Regler 30 abgeleitet, wobei nur auf die Vektorkomponenten "Azimut- und Elevationswinkel" zurückgegriffen wird. Die am Ausgang des Blocks 29 anstehenden Schätzvektoren ŷ werden hierzu in einem an einem ersten Ausgang 22 des Beobachters 20 angeschlossenen Subtrahierer 31 von den Abtastwerten ϕ_{Si}, ϑ_{Si} der Sichtlinie Si subtrahiert und die Winkeldifferenz Δϕ̂, Δϑ̂_{Si} an den Eingang des Reglers 30 gelegt. Da der Beobachter 20 mit einer geringeren Abtastrate arbeitet, ist dem Subtrahierer 31 noch ein Pufferspeicher 32 vorgeschaltet.

Dem Regler 30 werden über einem zweiten Ausgang 23 des Beobachters 20 als weitere Eingangsgrößen die Drehraten, also die Winkelgeschwindigkeiten der Azimut- und Elevationswinkel, zugeführt. Diese werden aus den am Ausgang des Halteglieds 28 in Zielkoordinaten zur Verfügung stehenden, prognostizierten Beobachterzustände x̂ abgeleitet, wobei diese zugleich in die Sensorkoordinaten überführt werden, so daß an weiteren Eingängen des Reglers 30 die aus den Beobachterzustände x̂ ermittelten Drehraten zur direkten Verarbeitung in Sensorkoordinaten anstehen. Diese Funktion ist in dem Koordinatentransformator 33 realisiert.

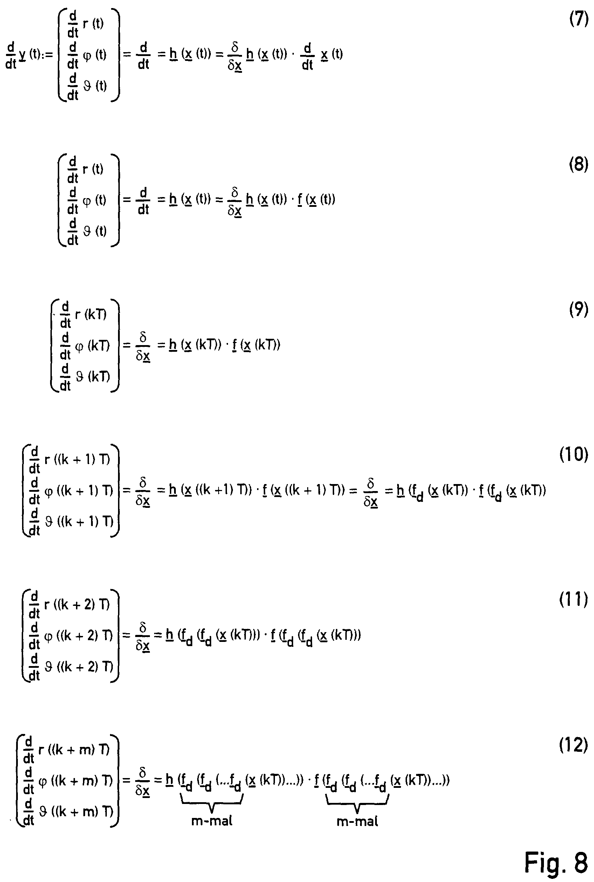

Der mathematische Prozeß der Koordinatentransformation bei gleichzeitiger Differentiation der Beobachterzustände x̂ wird durch die in Fig. 8 angegebenen Gleichungen erläutert. Dabei wird von der Differentialgl. (1) und der Beziehung gemäß Gl.(3) in Fig. 7 ausgegangen. Die Gl.(3) liefert die Winkel (Azimut und Elevation), jedoch nicht die Winkelgeschwindigkeiten. Um diese zu erhalten wird Gl.(3) nach der Zeit abgeleitet und man erhält Gl.(7) in Fig. 8. Setzt man Gl.(1) in Gl.(7) ein, so ergibt sich Gl.(8). Diese in einem Digitalrechner realisierte Gl.(8) liefert neben den Winkelgeschwindigkeiten d/dt (ϕ(t)); d/dt(ϑ(t)) auch die zeitliche Änderung des Abstands r zum Ziel d/dt(r(t)), die aber hier nicht weiter verwendet wird. Ist ein Schätzvektor x(kT) prognostiziert, so wird die für diesen Zeitpunkt relevante Winkelgeschwindigkeit gemäß Gl.(9) berechnet. Darüber hinaus erlaubt es die Gl.(4) in Fig. 7, auch die zeitlich nachfolgenden Werte t=(k+1)T der Winkelgeschwindigkeit in Abhängigkeit vom Vektor x(kT) zu ermitteln, und zwar indem in Gl.(9) in Fig. 8 die Variable k durch (k+1) substituiert wird und anschließend der Zustand x(k+1)T mittels f_{d}(x(kT)) eliminiert wird. Dadurch ergibt sich Gl.(10). Auf analoge Weise liefert die erneute Substitution der unabhängigen Variablen k durch k+1 sowie die anschließende Elimination des Zustandes x((k+1)T) mittels f_{d}(x(kT)) den Zusammenhang gemäß Gl.(11). Durch fortgesetztes Ausführen von Substitution und Elimination gelangt man schließlich zu Gl.(12), die es gestattet, die Winkelgeschwindigkeiten auf Basis der vom Beobachter 20 gelieferten Schätzung für x(kT) in die Zukunft zu extrapolieren. Für den eingeschwungenen Beobachter 20 sind die Größen x(t) durch die Beobachterzustände x̂ zu den diskreten Zeitpunkten zu ersetzen.

Da der Beobachter 20 mit einer geringeren Abtastrate arbeitet, werden zusätzlich Winkelgeschwindigkeiten zu Zwischenzeitpunkten durch Extrapolation - wie vorstehend dargestellt - generiert, so daß die Drehraten am Regler 18 mit hoher Abtastrate zur Verfügung stehen.

Vom Regler 30 erhält die Plattform 12 die Stellgrößen nach Wandlung durch den Digital/Analog-Wandler 34 in zeitkontinuierlicher Form, so daß die Plattform 12 mit darauf angeordnetem Sensor 11 dem sich bewegenden Ziel 10 mit hoher Genauigkeit nachgeführt wird.

Die Erfindung ist nicht auf das vorstehend beschriebene Ausführungsbeispiel beschränkt. So können im Block 27 mehrere mathematische Modelle für die Nachbildung des dynamischen Zielverhaltens abgespeichert werden. Im einfachsten Fall erfolgt die Auswahl eines geeigneten Modells durch den Operateur, der dabei die Eigenschaften des erwarteten Ziels und des Sensors berücksichtigt. Es können aber auch mehrere Beobachter 20 vorgesehen werden, die alle von unterschiedlichen mathematischen Modellen gemäß Gl.(1) in Fig. 7 ausgehen, wie z.B. von gleichförmig bewegten Zielen oder Drehmodellen. Der Operateur oder eine Automatik entscheidet, welches Modell zum Einsatz kommt, wobei der Beobachter 20 mit dem günstigsten Konvergenzverhalten ausgewählt wird.

Anstelle der durchgeführten Extrapolation der Winkelgeschwindigkeit auf Basis der vom Beobachter 20 gelieferten Schätzung in die Zukunft zwecks Erzielung höherer Abtastraten kann man auch die Winkelgeschwindigkeiten mit Hilfe einer Beobachterkaskade, d.h. mit mehreren, jeweils um einen Takt versetzt arbeitenden Beobachtern, ermitteln. Des weiteren können auch die Winkelbeschleunigungen als Eingangsgrößen für den Regler 30 verwendet werden. Hierzu ist im Block 33 ein weiterer Algorithmus zu realisieren, wobei sich die entsprechenden Gleichungen durch zweimaliges Differenzieren von Gl.(3) in Fig. 7 nach der Zeit ergeben.

Auf die A/D-Wandler 13, 14, 15 kann verzichtet werden, wenn der Sensor 11 mit einem digitalen Meßwerterfassungssystem ausgerüstet ist, oder, wenn die Schnittstellen zum Sensor 11 in digitaler Form realisiert werden.

### Literatur:

[1] Osborne "Nonlinear Least-Squares - the Levenberg-Marquard Algorithme revisited. J. Austral. Math. Soc. 1976, No. 19 (Series B), S 343 - 357.

## Patentansprüche

1. Verfahren zum Verfolgen eines sich bewegenden Ziels (10), bei dem mindestens ein Sensor (11) auf das Ziel (10) ausgerichtet und diesem nachgeführt wird, **gekennzeichnet durch** folgende Verfahrensschritte:
- mittels des Sensors (11) werden in aufeinanderfolgenden Meßzyklen mit vorzugsweise konstanter Zykluszeit innerhalb eines jeden Meßzyklus Zustandsdaten des Ziels (10) zeitdiskret gemessen und für jeden Meßzeitpunkt ein mindestens einen Teil der Zustandsdaten umfassender Meßvektor erstellt,
- eine zeitdiskrete Folge von Schätzvektoren, die für die Meßzeitpunkte geschätzte Zustandsdaten des Ziels (10) definieren, wird mit der zeitdiskreten Folge von Meßvektoren verglichen, und aus der Differenz werden Fehlervektoren abgeleitet,
- aus den Fehlervektoren und den Schätzvektoren werden mittels eines sog. Iterations-Algorithmus Korrekturvektoren berechnet,
- mit einer Nachbildung des dynamischen Zielverhaltens wird auf Basis der Fehlervektoren und der Schätzvektoren eine Prognose für die Zustände des Ziels (10) in dem nächsten Meßzyklus getroffen, die am Ende der Zykluszeit die zeitdiskrete Folge von Schätzvektoren für den Vergleich mit der zeitdiskreten Folge der Meßvektoren aus dem nachfolgenden Meßzyklus und für das Nachführen des Sensors (11) vorgibt.

2. Verfahren nach Anspruch 1, **dadurch gekennzeichnet, daß** der Iterations-Algorithmus schrittweitengesteuert wird.

3. Verfahren nach Anspruch 1 oder 2, **dadurch gekennzeichnet, daß** als Iterartions-Algorithmus das Levenberg-Marquardt-Verfahren eingesetzt wird.

4. Verfahren nach einem der Ansprüche 1 - 3, **dadurch gekennzeichnet, daß** die Korrekturvektoren einer ihre Dynamik begrenzenden Filterung unterzogen werden.

5. Verfahren nach einem der Ansprüche 1 - 4, **dadurch gekennzeichnet, daß** die prognostizierten Schätzvektoren für die Zeitspanne bis zum Vorliegen der nächsten Prognose, vorzugsweise mittels eines Halteglieds, gehalten werden.

6. Verfahren nach einem der Ansprüche 1 - 5, **dadurch gekennzeichnet, daß** die Meßvektoren in Sensorkoordinaten, vorzugsweise Polarkoordinaten und die Schätzvektoren in Zielkoordinaten, vorzugsweise kartesischen Koordinaten, erstellt werden und daß zum Vergleich der Schätz- und Meßvektoren und zum Nachführen des Sensors die Schätzvektoren in die Sensorkoordinaten transformiert werden.

7. Verfahren nach einem der Ansprüche 1 - 6, **dadurch gekennzeichnet, daß** für die Nachbildung des dynamischen Zielverhaltens eine Mehrzahl von Modellen abgespeichert und die Auswahl des Modells unter Berücksichtigung der Art des Sensors und des erwarteten Ziels getroffen wird.

8. Verfahren nach einem der Ansprüche 1 - 6, **dadurch gekennzeichnet, daß** für die Nachbildung des dynamischen Zielverhaltens eine Mehrzahl von dynamischen Modellen abgespeichert wird, daß parallel mit mehreren Modellen jeweils Schätzvektoren generiert werden und daß für die Nachführung nur die Schätzvektoren desjenigen Modells zugelassen werden, die bezüglich der Meßvektoren das günstigste Konvergenzverhalten erzielen.

9. Verfahren nach einem der Ansprüche 1 - 8, **dadurch gekennzeichnet, daß** der mindestens eine Sensor (11) auf einer in Azimut und Elevation schwenkbaren Plattform (12) so befestigt wird, daß seine Ausgangssignale eine Winkeldifferenz zwischen der Sichtlinie der Plattform (12) und dem Ziel (10) repräsentieren und daß die in den Meßvektoren enthaltenen Zustandsdaten "Azimutwinkel" und "Elevationswinkel" durch Addition von zu gleichen Zeitpunkten aufgenommenen Abtastwerten der Ausgangssignale des Sensors (11) und der Sichtlinienwinkel in Elevation und Azimut gebildet werden.

10. Verfahren nach Anspruch 9, **dadurch gekennzeichnet, daß** zur Nachführung der Plattform (12) die Stellgrößen eines Reglers (30) verwendet werden, dem als Eingangsgrößen einerseits die in Sensorkoordinaten transformierten Schätzvektoren, deren Zustandsdaten "Elevationswinkel" und "Azimutwinkel" um die zeitpunktentsprechenden Elevations- und Azimutwinkelwerten der Sichtlinie (Si) reduziert sind und andererseits aus den Schätzvektoren abgeleitete Drehraten in Azimut und Elevation zugeführt werden.

11. Verfahren nach Anspruch 10, **dadurch gekennzeichnet, daß** zur Ableitung der Drehraten die Schätzvektoren bei gleichzeitiger Transformation in die Sensorkoordinaten differenziert werden und aus den differenzierten und transformierten Schätzvektoren die Winkelgeschwindigkeiten im Azimut und Elevation entnommen werden.
